# EUROPÄISCHE PATENTSCHRIFT

(11) **EP 0 985 085 B1**
(45) Veröffentlichungstag und Bekanntmachung des Hinweises auf die Patenterteilung: **10.07.2002**
(21) Anmeldenummer: 98928287.6
(22) Anmeldetag: 18.05.1998
(51) Int. Cl.: F01N 3/20, F02M 45/02

(54) **VERFAHREN UND VORRICHTUNG ZUM BETREIBEN EINER BRENNKRAFTMASCHINE**
METHOD AND DEVICE FOR OPERATING AN INTERNAL COMBUSTION ENGINE
PROCEDE ET DISPOSITIF PERMETTANT DE FAIRE FONCTIONNER UN MOTEUR A COMBUSTION INTERNE

(30) Priorität: 26.05.1997 DE 19721933
(43) Veröffentlichungstag der Anmeldung: 15.03.2000
(73) Patentinhaber: AUDI AG, 85045 Ingolstadt (DE)
(72) Erfinder: OTTOWITZ, Alfred, D-85084 Reichertshofen (DE)
(86) Internationale Anmeldenummer: EP9802907
(87) Internationale Veröffentlichungsnummer: WO9854444

(56) Entgegenhaltungen:
- EP-A- 0 621 400
- WO-A-96/03572
- WO-A-97/11269
- PATENT ABSTRACTS OF JAPAN Bd. 018, Nr. 408 (M-1647) 29 Juli 1994 & JP 06 117 225 A (TOYOTA MOTOR CORP.) 26 April 1994

## Beschreibung

Die vorliegende Erfindung betrifft ein Verfahren und eine Vorrichtung zum Betreiben einer Brennkraftmaschine, wobei der Abgasstrang zumindest zeitweilig durch zusätzliche Brennstoffzufuhr mit einem erhöhten Abgasmassenstrom beaufschlagt wird.

Ein derartiges Verfahren und eine Vorrichtung zur Durchführung dieses Verfahrens beschreibt zum Beispiel die deutsche Druckschrift DE 41 39 291 A1. Dort wird zur Erzielung einer verbesserten Abgasentgiftung und eines schnelleren Hochfahrens der Abgasturbine im Bereich des Abgaskrümmers eine zusätzliche Menge an Kraftstoff zugeführt, welche kurz vor der Abgasturbine fremdgezündet wird. Dieses Verfahren sowie die verfahrensgemäße Vorrichtung haben allerdings den Nachteil, daß sich der zusätzliche Kraftstoff nicht in ausreichend guter Weise im Abgas verteilen kann und daß im Abgasstrang der Brennkraftmaschine aufwendige Einrichtungen für die Zufuhr und für die Zündung des zusätzlichen Brennstoffs bereitgestellt werden müssen.

Zudem ist in den Druckschriften WO 96/03572 und DE 196 22 832 A1 ein Verfahren und eine Vorrichtung zur Steigerung der Effizienz eines Katalysators in einem Dieselmotor beschrieben, wobei zusätzlich zur Haupteinspritzung während des Auslaßtaktes des Motors eine Nacheinspritzung vorgenommen wird. Der zusätzliche Brennstoff wird dort durch die Motorbrennstoffeinspritzvorrichtung in die Zylinder eingebracht und selbstgezündet.

Es ist Aufgabe der vorliegenden Erfindung, die bekannten Verfahren so weiterzubilden, daß eine verbesserte Durchmischung und eine vereinfachte Zündung des Brennstoff-/Abgasgemischs ermöglicht wird. Zudem soll eine Vorrichtung zur Durchführung des weitergebildeten Verfahrens bereitgestellt werden.

Die verfahrensgemäße Aufgabe wird durch die Merkmale des Patentanspruchs 1 gelöst. Indem die zusätzliche Brennstoffzufuhr während des Auslaßtaktes bei geöffnetem Auslaßventil beziehungsweise bei geöffneten Auslaßventilen direkt in den mit Restgas gefüllten Brennraum der Brennkraftmaschine erfolgt, wird eine bessere Durchmischung des zusätzlichen Brennstoffs mit dem Restgas erreicht, da die im Brennraum vorhandenen optimierten Geometrien hierzu genutzt werden können. Aufgrund der besseren Durchmischung wird bei der Nachverbrennung des zusätzlichen Brennstoffs und des Restgases der Druck und die Temperatur des Abgases in einer Weise erhöht, so daß das Ansprechverhalten einer Abgasturbine deutlich verbessert wird. Zudem kann durch die Erhöhung von Druck und Temperatur des Abgases ein im Abgasstrang der Brennkraftmaschine gegebenenfalls vorgesehener Katalysator schneller seine Betriebstemperatur erreichen und diese Betriebstemperatur auch bei ungünstigen Bedingungen aufrecht halten. Solche ungünstigen Bedingungen liegen insbesondere während des Schubbetriebs der Brennkraftmaschine vor, da die normale Brennstoffzufuhr dann eingestellt wird, wodurch nicht nur eine Absenkung der Drehzahl der Abgasturbine sondern auch eine Absenkung der Temperatur des Katalysators droht. Und indem der zusätzliche Brennstoff fremdgezündet wird, ist sichergestellt, daß auf jeden Fall eine Nachverbrennung des zusätzlichen Brennstoffs erfolgt.

Bevorzugt erfolgt die zusätzliche Brennstoffzufuhr bevor der Kolben der Brennkraftmaschine den Ladungswechsel-OT (OT = oberer Totpunkt) erreicht. Dadurch bleibt für den zusätzlichen Brennstoff noch ausreichend Zeit, um sich mit dem Restgas zu durchmischen und um den Brennraum durch das geöffnete Auslaßventil zu verlassen. Wird der zusätzliche Brennstoff dagegen bereits verbrannt, bevor der Kolben den Ladungswechsel-OT erreicht, so bewirkt dies sogar eine leichte Verzögerung des Kolbens. Grundsätzlich ist die zusätzliche Brennstoffzufuhr in einem Kurbelwellenwinkelbereich von ca. 120 - 380 Grad nach dem Zünd-OT (OT = oberer Totpunkt) denkbar.

Die zusätzliche Brennstoffzufuhr sollte bei geschlossenen Einlaßventilen erfolgen. Somit kann die Mischung aus zusätzlichem Brennstoff und Restgas nicht in den Ansaugstrang der Brennkraftmaschine gelangen, wodurch sich der Wirkungsgrad der Brennkraftmaschine verschlechtern würde. Außerdem kann die Öffnungszeit der Einlaßventile der Brennkraftmaschine zumindest zeitweilig, das heißt bei der zusätzlichen Brennstoffzufuhr, in Richtung "spät" verstellt werden. Denn dies hat den Effekt, daß der Zeitraum zwischen der Öffnung des Auslaßventils und der Öffnung des Einlaßventils größer wird, so daß für die Zufuhr des zusätzlichen Brennstoffs und die Durchmischung des zusätzlichen Brennstoffs mit dem Restgas entsprechend mehr Zeit zur Verfügung steht.

In zweckmäßiger Weise wird der zusätzliche Brennstoff während der Kaltfahrphasen, während der Beschleunigungsphasen und/oder im warmen Zustand der Brennkraftmaschine bei niedriger Last, das heißt also auch im Schubbetrieb, eingespritzt. Denn speziell bei diesen Betriebsbedingungen ist eine Verbesserung des Ansprechverhaltens der Abgasturbine, sowie ein schnelleres Aufheizen beziehungsweise ein konstantes Beheizen des Abgaskatalysators wünschenswert.

Unmittelbar vor dem Zuführen des zusätzlichen Brennstoffs, sollte das Restgas im Brennraum der Brennkraftmaschine einen Luftüberschuß aufweisen, damit für die Nachverbrennung der Mischung aus zusätzlichem Brennstoff und Restgas nicht noch auf anderem Wege zusätzliche Frischluft zugeführt werden muß. Zur Erzielung von Restgas mit ausreichendem Luftüberschuß könnte zum Beispiel die während des Schubbetriebs geschlossene Drosselklappe in Abhängigkeit von der Drehzahl der Brennkraftmaschine geöffnet werden.

Natürlich könnte für die Nachverbrennung aber auch noch auf anderem Wege zusätzliche Frischluft zugeführt werden. So könnte zum Beispiel während des Schubbetriebs vor der geschlossenen Drosselklappe Frischluft aus dem Ansaugstrang abgezweigt und möglichst brennraumnah in den Abgasstrang eingeführt wird. Die Zufuhr der zusätzlichen Frischluft könnte dabei in Abhängigkeit vom Ladedruck der Abgasturbine, der Drehzahl der Brennkraftmaschine und/oder der zeitlichen Ableitung der Drehzahl (Beschleunigung bzw. Verzögerung) gesteuert werden.

Die Menge des zusätzlichen Brennstoffs wird bei dem erfindungsgemäßen Verfahren in Abhängigkeit von dem Luftüberschuß in der Restgasmenge und/oder der Menge der zusätzlich zugeführten Frischluft bestimmt.

Die vorrichtungsgemäße Aufgabe wird durch die Merkmale des Patentanspruchs 9 gelöst. Indem der zusätzliche Brennstoff mittels wenigstens einer im Brennraum angeordneten Einspritzdüse eingespritzt wird, können die bei Otto-Brennkraftmaschinen mit Direkteinspritzung obligatorisch im Brennraum vorhandenen Einspritzdüsen Verwendung finden, so daß keine weiteren Einrichtungen für die Zufuhr des zusätzlichen Brennstoffs erforderlich sind. Außerdem kann dabei auch die für die Einspritzdüsen bereits vorhandene Ansteuerelektronik genutzt werden.

Bevorzugt ist das wenigstens eine Einspritzventil für die Einspritzung des zusätzlichen Brennstoffs zylinderkopfseitig in der Brennkraftmaschine angeordnet. Somit kann auch noch kurz bevor der Kolben der Brennkraftmaschine den Ladungswechsel-OT erreicht in besonders günstiger Weise zusätzlicher Brennstoff zugeführt werden.

Vorrichtungsgemäß kann Restgas mit einem hohen Luftüberschuß bereitgestellt und/oder stromauf einer Drosselklappe Frischluft aus dem Ansaugstrang abgezweigt und möglichst brennraumnah in den Abgasstrang eingeleitet werden, so daß ein zuverlässiges Nachbrennen gewährleistet ist.

In einer vorteilhaften Ausführungsform der vorliegenden Erfindung erfolgt die Fremdzündung der Mischung aus zusätzlichem Brennstoff, Restgas und/oder zusätzlicher Frischluft durch wenigstens eine im Brennraum der Brennkraftmaschine angeordnete Zündkerze. Daher kann auch die bei Otto-Brennkraftmaschinen obligatorisch vorhandene Zündkerze zum Einsatz kommen, so daß hierbei keine weiteren Einrichtungen für die Zündung des zusätzlichen Brennstoffs notwendig sind. Auch hierbei gilt, daß die bereits vorhandene Ansteuerelektronik der Zündkerzen genutzt werden kann.

Besonders bevorzugt ist die wenigstens eine Zündkerze für die Fremdzündung der Mischung aus zusätzlichem Brennstoff, Restgas und/oder zusätzlicher Frischluft zylinderkopfseitig in der Brennkammer angeordnet.

Die vorliegende Erfindung wird anhand der nachfolgenden Zeichnungsfigur näher erläutert.

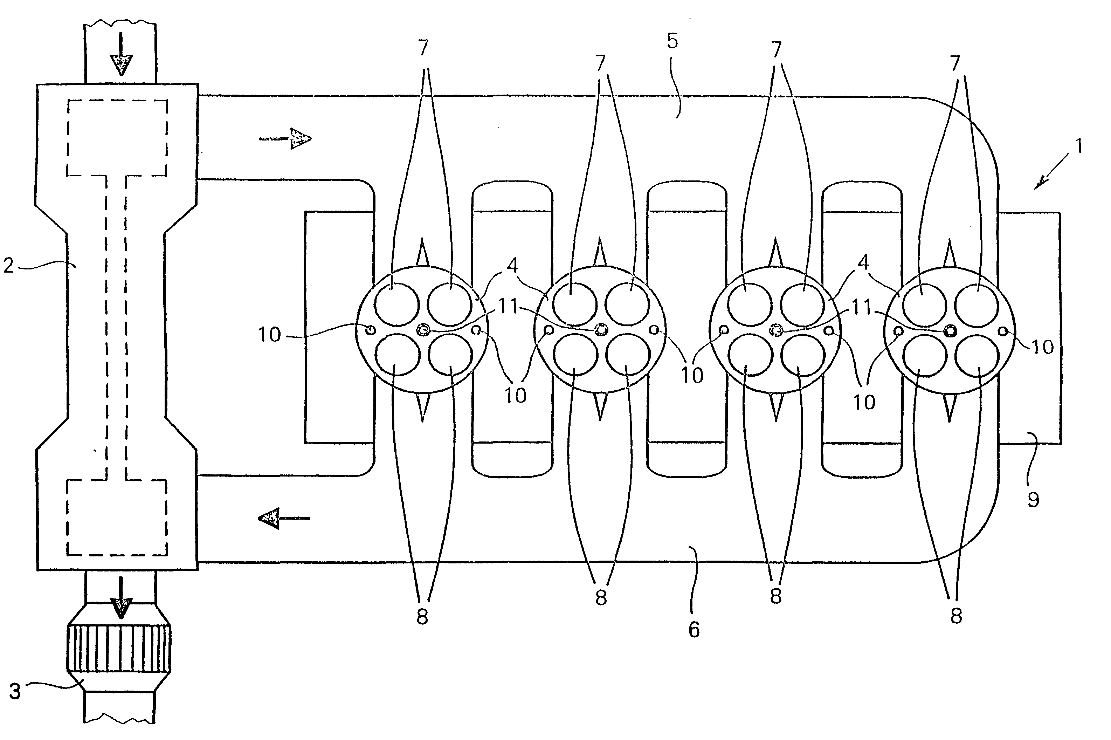

Die Figur zeigt eine schematische Darstellung einer vierzylindrigen Hubkolben-Brennkraftmaschine 1 mit einem Abgasturbolader 2 und einem Katalysator 3.

Die vier Zylinder 4 der Brennkraftmaschine 1 sind einlaßseitig an einem Ansaugverteiler 5 und auslaßseitig an einem Abgaskrümmer 6 angeschlossen.

Zum Ladungswechsel sind jedem Zylinder 4 zwei Einlaßventile 7 und zwei Auslaßventile 8 zugeordnet. Diese Ventile 7, 8 sind im Zylinderkopf 9 der Brennkraftmaschine 1 angeordnet. Ebenfalls im Zylinderkopf 9 der Brennkraftmaschine 1 sind beispielhaft zwei Einspritzdüsen 10 und eine Zündkerze 11 pro Zylinder 4 angeordnet. Diese Einspritzdüsen 10 sind in symmetrischer Weise zu beiden Seiten der in den Zylindern 4 mittig angeordneten Zündkerze 11 zwischen den Einlaßventilen 7 und den Auslaßventilen 8 angeordnet.

Die nach dem Viertaktverfahren betriebene Brennkraftmaschine 1 nutzt im Normalbetrieb die beiden vorhandenen Einspritzdüsen 10 zum Direkteinspritzen von Otto-Brennstoff und die Zündkerze 11 zum Zünden des im Brennraum der Brennkraftmaschine 1 gebildeten Gemischs aus Brennstoff und Frischgas.

Nach dem Zünden und Verbrennen des Gemisches aus Brennstoff und Frischgas beginnt der Auslaßtakt, wobei die beiden Einlaßventile 7 geschlossen und die beiden Auslaßventile 8 geöffnet sind. Während des Auslaßtaktes und kurz bevor der nicht dargestellte Kolben der Brennkraftmaschine 1 seinen oberen Totpunkt erreicht, wird durch eine oder beide der Einspritzdüsen 10 eine geringe Menge an zusätzlichem Brennstoff in den Brennraum im Zylinder 4 eingespritzt, die einfach durch einen weiteren Zündfunken der Zündkerze 11 fremdgezündet wird.

Das nachverbrennende Gemisch aus dem zusätzlichen Brennstoff und dem Restgas verlagert sich dann an den offenen Auslaßventilen 8 vorbei in den Abgaskrümmer 6, wobei diese Verlagerung durch die weitere Bewegung des Kolbens in Richtung zum oberen Totpunkt noch unterstützt wird.

Damit die Mischung aus dem zusätzlichen Brennstoff und dem Restgas nicht auch an den Einlaßventilen 7 vorbei in den Ansaugverteiler 5 gelangen kann, sind die Steuerzeiten der Einlaßventile 7 so eingestellt, daß sich die Öffnungszeiten der Einlaßventile 7 und der Auslaßventile 8 während der Einspritzung des zusätzlichen Brennstoffs und der Durchmischung des zusätzlichen Brennstoffs und des Restgases nicht überschneiden. Dazu werden die Öffnungszeiten der Einlaßventile 7 geringfügig in Richtung "spät" verstellt.

Durch die Einspritzung des zusätzlichen Brennstoffs weist die in den Abgaskrümmer 6 gelangende Mischung eine erhöhte Abgasenergie auf, die sich insbesondere durch einen Druck- und Temperaturanstieg bemerkbar macht. Diese erhöhte Abgasenergie bewirkt bei dem sich an den Abgaskrümmer 6 anschließenden Abgasturbolader 2 ein besseres Ansprechverhaiten im unteren Drehzahlbereich. Zudem bewirkt die erhöhte Abgasenergie, daß der sich in der Figur an den Abgasturbolader 2 anschließende Katalysator 3 schneller auf seine Betriebstemperatur aufgeheizt werden kann und daß der Katalysator 3 diese Betriebstemperatur auch besser halten kann. Auf diese Weise kann eine bei Katalysatoren für Magermotoren auftretende Schwefelvergiftung wieder rückgängig gemacht werden.

Die Pfeile in der Figur geben die Strömungsrichtung der angesaugten Frischluft beziehungsweise der ausgeschobenen Abgase an.
¹ Appears to be misprint for '9 or 10' - translator
² Appears to be misprint for 11 - translator

## Patentansprüche

1. Verfahren zum Betreiben einer Brennkraftmaschine, wobei der Abgasstrang zumindest zeitweilig durch zusätzliche Brennstoffzufuhr mit einem erhöhten Abgasmassenstrom beaufschlagt wird, wobei die zusätzliche Brennstoffzufuhr während des Auslaßtaktes bei geöffnetem Auslaßventil (8) bzw. bei geöffneten Auslaßventilen (8) direkt in den Brennraum der Brennkraftmaschine (1) erfolgt,
**dadurch gekennzeichnet, daß**
der zusätzliche Brennstoff fremdgezündet wird.

2. Verfahren nach Anspruch 1, **dadurch gekennzeichnet, daß** die zusätzliche Brennstoffzufuhr erfolgt, bevor der Kolben der Brennkraftmaschine (1) den Ladungswechsel-OT erreicht.

3. Verfahren nach einem der Ansprüche 1 oder 2, **dadurch gekennzeichnet, daß** die zusätzliche Brennstoffzufuhr bei geschlossenem Einlaßventil (7) bzw. geschlossenen Einlaßventilen (7) erfolgt.

4. Verfahren nach Anspruch 3, **dadurch gekennzeichnet, daß** die Öffnungszeit des Einlaßventils (7) bzw. der Einlaßventile (7) der Brennkraftmaschine (1) zumindest während der zusätzlichen Brennstoffzufuhr in Richtung "spät" verstellt wird.

5. Verfahren nach einem der Ansprüche 1 bis 4, **dadurch gekennzeichnet, daß** die zusätzliche Brennstoffzufuhr während der Kaltfahrphasen, während der Beschleunigungsphasen der Brennkraftmaschine (1) und/oder im warmen Zustand der Brennkraftmaschine bei niedriger Last erfolgt.

6. Verfahren nach einem der Ansprüche 1 bis 5, **dadurch gekennzeichnet, daß** unmittelbar vor dem Zuführen des zusätzlichen Brennstoffs das Restgas im Brennraum der Brennkraftmaschine (1) einen Luftüberschuß aufweist und/oder zusätzliche Frischluft in den Abgasstrang zugeführt wird.

7. Verfahren nach Anspruch 6, **dadurch gekennzeichnet, daß** die Menge des zusätzlichen Brennstoffs in Abhängigkeit von der Restgasmenge beziehungsweise dem Luftüberschuß in den Zylindern (4) der Brennkraftmaschine (1) und/oder der Menge der zusätzlich zugeführten Frischluft bestimmt wird.

8. Verfahren nach einem der Ansprüche 1 bis 7, **dadurch gekennzeichnet, daß** die Zündung der Mischung aus zusätzlichem Brennstoff, Restgas und/oder zusätzlicher Frischluft innerhalb des Brennraums der Brennkraftmaschine (1) stattfindet.

9. Der Brennkraftmaschine, bei der Abgasstrang zumindest zeitweilig durch zusätzliche Brennstoffzufuhr mit einem erhöhten Abgasmassenstrom beaufschlagt wird, wobei die zusätzliche Brennstoffzufuhr während des Auslaßtaktes bei geöffnetem Auslaßventil (8) bzw. bei geöffneten Auslaßventilen (8) direkt in den Brennraum der Brennkraftmaschine (1) mittels wenigstens einer im Brennraum angeordnten Einspritzdüse (10) erfolgt,
**dadurch gekennzeichnet, daß**
der zusätzliche Brennstoff fremdgezündet wird.

10. Vorrichtung nach Anspruch 9, **dadurch gekennzeichnet, daß** die wenigstens eine Einspritzdüse (10) für die Einspritzung des zusätzlichen Brennstoffs zylinderkopfseitig in der Brennkammer angeordnet ist.

11. Vorrichtung nach einem der Ansprüche 10 oder 11, **dadurch gekennzeichnet, daß** die Fremdzündung der Mischung aus zusätzlichem Brennstoff, Restgas und/oder zusätzlicher Frischluft durch wenigstens eine im Brennraum der Brennkraftmaschine (1) angeordnete Zündkerze (11) erfolgt.

12. Vorrichtung nach Anspruch 12, **dadurch gekennzeichnet, daß** die wenigstens eine Zündkerze (11) für die Fremdzündung der Mischung aus zusätzlichem Brennstoff, Restgas und/oder zusätzlicher Frischluft zylinderkopfseitig in der Brennkammer angeordnet ist.

## Claims

1. A method of operating an internal combustion engine whereby the exhaust tract is charged at least intermittently with an increased mass flow of exhaust gas through the supplying of additional fuel, the additional fuel being supplied directly to the combustion chamber of the internal combustion engine (1) during the exhaust stroke with the exhaust valve (8) or exhaust valves (8) open, **characterised in that** the additional fuel is spark-ignited.

2. A method according to Claim 1, **characterised in that** the additional fuel is supplied before the piston of the internal combustion engine (1) reaches the gas exchange TDC (top dead centre).

3. A method according to one of the claims 1 or 2, **characterised in that** the additional fuel is supplied with the exhaust valve (7) or exhaust valves (7) closed.

4. A method according to Claim 3, **characterised in that** the open period of the inlet valve (7) or inlet valves (7) of the internal combustion engine is adjusted in the "retard" direction at least while the additional fuel is being supplied.

5. A method according to one of the claims 1 to 4, **characterised in that** the additional fuel is supplied during high-power driving phases, during acceleration phases of the internal combustion engine (1) and/or when the internal combustion engine is in a hot state under low load.

6. A method according to one of the claims 1 to 5, **characterised in that** immediately before the additional fuel is supplied the residual gas in the combustion chamber of the internal combustion engine (1) has a surplus of air and/or additional fresh air is fed into the exhaust tract.

7. A method according to Claim 6, **characterised in that** the quantity of additional fuel is determined as a function of the quantity of residual gas or of the surplus of air in the cylinders (4) of the internal combustion engine (1) and/or of the quantity of the additional fresh air supplied.

8. A method according to one of the claims 1 to 7, **characterised in that** the ignition of the mixture of additional fuel, residual gas and/or additional fresh air takes place inside the combustion chamber of the internal combustion engine (1).

9. An internal combustion engine in which the exhaust tract is charged at least intermittently with an increased mass flow of exhaust gas through the supplying of additional fuel, the additional fuel being supplied directly to the combustion chamber of the internal combustion engine (1) by means of at least one injection nozzle (10) arranged in the combustion chamber, during the exhaust stroke and with the exhaust valve (8) or exhaust valves (8) open, **characterised in that** the additional fuel is spark-ignited.

10. A device according to Claim 9, **characterised in that** the at least one injection nozzle (10) for injecting the additional fuel is arranged in the cylinder-head portion of the combustion chamber.

11. A device according to one of the claims 10 or 11¹, **characterised in that** the spark-ignition of the mixture of additional fuel, residual gas and/or additional fresh air is effected by at least one sparking plug (11) arranged in the combustion chamber of the internal combustion engine (1).

12. Device according to Claim 12², **characterised in that** the at least one sparking plug (11) for spark-ignition of the mixture of additional fuel, residual gas and/or additional fresh air is arranged in the cylinder-head portion of the combustion chamber.

## Revendications

1. Procédé pour faire fonctionner un moteur à combustion interne dans lequel le tronçon de gaz d'échappement est sollicité au moins par moments par un apport de carburant supplémentaire, avec un débit massique de gaz d'échappement augmenté, dans lequel l'apport de carburant supplémentaire s'effectue pendant le cycle d'échappement lorsque la soupape d'échappement (8) est ouverte ou lorsque les soupapes d'échappement (8) sont ouvertes, directement dans la chambre de combustion du moteur à combustion interne (1),
**caractérisé en ce que**
le carburant supplémentaire est allumé par un allumage externe.

2. Procédé selon la revendication 1, **caractérisé en ce que** l'apport de carburant supplémentaire s'effectue avant que le piston du moteur à combustion interne (1) ait atteint le point mort haut (PMH) auquel se produit le changement de charge.

3. Procédé selon l'une des revendications 1 ou 2, **caractérisé en ce que** l'apport de carburant supplémentaire s'effectue lorsque la soupape d'admission (7) est fermée ou lorsque les soupapes d'admission (7) sont fermées.

4. Procédé selon la revendication 3, **caractérisé en ce que** le temps d'ouverture d'une soupape d'admission (7) ou des soupapes d'admission (7) du moteur à combustion interne (1) est réglé dans le sens d'une valeur "tardive", au moins pendant l'apport de carburant supplémentaire.

5. Procédé selon l'une des revendications 1 à 4, **caractérisé en ce que** l'apport de carburant supplémentaire s'effectue pendant les phases de démarrage à froid, pendant les phases d'accélération du moteur à combustion interne (1) et/ou lorsque le moteur à combustion interne est à l'état chaud, à faible charge.

6. Procédé selon l'une des revendications 1 à 5, **caractérisé en ce que**, directement avant l'apport du carburant supplémentaire, les gaz résiduels se trouvant dans la chambre de combustion du moteur à combustion interne (1) présentent un excès d'air et/ou de l'air neuf supplémentaire est amené dans le tronçon de gaz d'échappement.

7. Procédé selon la revendication 6, **caractérisé en ce que** la quantité de carburant supplémentaire est déterminée en fonction de la quantité de gaz résiduel ou de l'excès d'air dans les cylindres (4) du moteur à combustion interne (1) et/ou de la quantité d'air neuf supplémentaire fourni.

8. Procédé selon l'une des revendications 1 à 7, **caractérisé en ce que** l'allumage du mélange formé de carburant supplémentaire, de gaz résiduel et/ou d'air neuf supplémentaire s'effectue à l'intérieur de la chambre de combustion du moteur à combustion interne (1).

9. Moteur à combustion interne pour lequel le tronçon de gaz d'échappement est sollicité au moins par moment par un apport supplémentaire de carburant avec un débit masse de gaz d'échappement augmenté, l'apport de carburant supplémentaire se faisant pendant le cycle d'échappement lorsque la soupape d'échappement (8) est ouverte ou lorsque les soupapes d'échappement (8) sont ouvertes, directement dans la chambre de combustion du moteur à combustion interne (1), à l'aide d'au moins un injecteur (10) disposé dans la chambre de combustion
**caractérisé en ce que**
le carburant supplémentaire est allumé par un allumage extérieur.

10. Dispositif selon la revendication 9, **caractérisé en ce que** le au moins un injecteur (10), prévu pour injecter le carburant supplémentaire, est disposé du côté culasse dans la chambre de combustion.

11. Dispositif selon l'une des revendications 10 à 11, **caractérisé en ce que** l'allumage extérieur du mélange formé de carburant supplémentaire de gaz résiduel et/ou d'air neuf supplémentaire s'effectue à l'aide d'au moins une bougie d'allumage (11) disposée dans la chambre de combustion du moteur à combustion interne (1).

12. Dispositif selon la revendication 11, **caractérisé en ce que** la au moins une bougie d'allumage (11), prévue pour l'allumage extérieur du mélange formé de carburant supplémentaire des gaz résiduels et/ou de l'air neuf supplémentaire, est disposée côté culasse dans la chambre de combustion.
